(19) **Europäisches Patentamt**
**European Patent Office**
**Office européen des brevets**

(11) **EP 1 229 310 B1**

(12) **EUROPÄISCHE PATENTSCHRIFT**

(45) Veröffentlichungstag und Bekanntmachung des Hinweises auf die Patenterteilung:
**24.10.2007 Patentblatt 2007/43**

(51) Int Cl.:
**G01F 1/84** (2006.01)

(21) Anmeldenummer: **02007723.6**

(22) Anmeldetag: **14.06.1995**

(54) **Coriolis-Massedurchflussaufnehmer mit einem einzigen Messrohr**

Coriolis mass flowmeter with a single measurement tube

Débitmètre massique à effet Coriolis avec un seul tuyau de mesure

(84) Benannte Vertragsstaaten:
**CH DE DK ES FR GB IT LI NL**

(43) Veröffentlichungstag der Anmeldung:
**07.08.2002 Patentblatt 2002/32**

(62) Dokumentnummer(n) der früheren Anmeldung(en) nach Art. 76 EPÜ:
**95109152.9 / 0 749 006**

(73) Patentinhaber:
• **Endress + Hauser Flowtec AG**
  **4153 Reinach BL 1 (CH)**
• **Endress+Hauser (Deutschland) AG+Co. KG**
  **79576 Weil am Rhein (DE)**

(72) Erfinder:
• **Hagenmayer, Heinrich, Dr.**
  **79639 Grenzach-Wyhlen (DE)**
• **Wenger, Alfred, Dr.**
  **8413 Neftenbach (CH)**

(74) Vertreter: **Andres, Angelika Maria et al**
**Endress+Hauser (Deutschland) AG+Co. KG**
**PatServe**
**Colmarer Strasse 6**
**79576 Weil am Rhein (DE)**

(56) Entgegenhaltungen:
**EP-A- 0 317 340      EP-A- 0 578 113**
**EP-A- 0 598 287**

**Beschreibung**

Die Erfindung betrifft Massedurchflußaufnehmer nach dem Coriolis-Prinzip, die ein einziges Meßrohr haben, das in einem Glockenmode schwingt.

In der EP-A 317 340 ist ein Massedurchflußaufnehmer nach dem Coriolis-Prinzip beschrieben, der in eine Rohrleitung einfügbar ist und im Betrieb von einem zu messenden Fluid durchströmt wird,

- mit einem Schwingungssystem,

    -- das ein einziges gerades, vom Fluid durchströmtes Meßrohr und
    -- zwei entlang des Meßrohrs sich erstreckende und endseits an ihm befestigte Knotenmassen enthält, deren Gewicht so verteilt ist,

        --- daß deren Schwerpunkt auf der Mitte der Achse des Meßrohrs liegt, und

    -- das im Betrieb des Massedurchflußaufnehmers mittels mindestens eines Erregers zu einer saitenartigen Schwingung angeregt wird,

- mit einem Träger, insb. einem Trägerrohr, an dem das Schwingungssystem über Balgen endseits befestigt und über den das Schwingungssystem mit der Rohrleitung verbunden ist, und
- mit mindestens je einem Sensor für die einlaßseitigen bzw. auslaßseitigen Schwingungen des Meßrohrs.

Dieser Massedurchflußaufnehmer ist jedoch weder vollständig für alle vorkommenden Fluid-Dichten dynamisch ausbalancierbar, noch ist er besonders kompakt gebaut, hat also nicht eine möglichst kleine Baulänge.

In der EP-A 316 908 und in dem im Tagungsband "FLOMEKO '94, 7th International Conference on Flow Measurement", Glasgow, June 1994 veröffentlichten Aufsatz von H. Hagenmeyer et al. "Design of an Advanced Coriolis Mass Flowmeter using the Hoope Mode" ist ferner ein Massedurchflußaufnehmer nach dem Coriolis-Prinzip beschrieben, der in eine Rohrleitung einfügbar ist und im Betrieb von einem zu messenden Fluid durchströmt wird,

- mit einem einzigen geraden, vom Fluid durchströmten Meßrohr,

    -- das im Betrieb des Massedurchflußaufnehmers mittels mindestens eines Erregers in einer seiner Eigenschwingungen derart angeregt wird,

        --- daß es in einem Glockenmode schwingt, und

- mit einem Träger, insb. einem Trägerrohr, an dem das Meßrohr endseits befestigt und über den es mit der Rohrleitung verbunden ist, und
- mit mindestens je einem Sensor für die einlaßseitigen bzw. auslaßseitigen Schwingungen des Meßrohrs.

Untersuchungen haben nun jedoch gezeigt, daß derartige Massedurchflußaufnehmer, bei denen das Meßrohr im Glockenmode (im Englischen: hoop mode - "hoope" im obigen Titel ist ein Schreibfehler) schwingt, bei nicht-idealen Fluiden, insb. bei nicht-homogenen Fluiden, bei Mehrstoff-Fluiden, bei Fluiden mit hoher Viskosität oder bei Fluiden mit hoher Kompressibilität, einen erheblich größeren Meßfehler haben und daher erheblich ungenauer messen als Massedurchflußaufnehmer der eingangs zuerst genannten Art mit saitenartig schwingendem Meßrohr.

Dies ist u.a. darauf zurückzuführen, daß der aus dem Meßrohr mit dem zu messenden Fluid bestehende Hauptschwinger auf irreversible Weise Schwingungsenergie abgibt, z.B. durch Schallabstrahlung an die Umgebung. Der pro Schwingungsperiode abgegebene Energiebetrag dE/E ist dabei umgekehrt proportional zum Qualitätsfaktor Q des Schwingungssystems im tatsächlichen Schwingungsmode: $(dE/E)_{Periode} \sim 1/Q.$

Zur Minimierung der erwähnten Meßfehler, also zur Erhöhung der Meßgenauigkeit auch bei den erwähnten nicht-idealen Fluiden, ist es daher erforderlich, den Qualitätsfaktor Q so groß wie möglich zu machen.

Hierzu besteht die Erfindung in einem Massedurchflußaufnehmer nach dem Coriolis-Prinzip, der in eine Rohrleitung einfügbar und im Betrieb von einem zu messenden Fluid durchströmt ist,

- mit einem Schwingungssystem,

-- das ein einziges gerades, vom Fluid durchströmtes Meßrohr als Hauptschwinger und

-- das einen das Fluid nicht berührenden Hilfsschwinger enthält,

--- der über Verbindungselemente mit dem mechanisch gekoppelt ist, wobei das Meßrohr ausserdem endseits im jeweiligen Ende des Hilfsschwingers dicht eingepasst ist, und

-- das im Betrieb des Massedurchflußaufnehmers mittels mindestens eines Erregers in einer seiner Eigenschwingungen derart angeregt ist,

--- daß das Meßrohr in einem Glockenmode schwingt,

- mit einem Träger, insb. einem Trägerrohr, an dem das Schwingungssystem endseits befestigt und über den das Schwingungssystem mit der Rohrleitung verbunden ist, und

- mit mindestens je einem Sensor für die einlaßseitigen bzw. auslaßseitigen Schwingungen des Meßrohrs,

-- wobei das Schwingungssystem so dimensioniert ist,

--- daß seine kinetische Energie mindestens doppelt so groß ist wie die kinetische Energie des Hauptschwingers, und

-- wobei die Verbindungselemente derart ausgebildet und angeordnet sind,

--- daß durch Corioliskräfte erzeugte Glockenmodi des Meßrohrs möglichst wenig auf den Hilfsschwinger übertragen werden.

Die Erfindung geht dabei von der Erkenntnis aus, daß es nicht nur genügt, den Qualitätsfaktor durch mechanisches Design so groß wie möglich zu machen - das den Term dE in der obigen Proportionalität festlegt -, sondern daß der Qualitätsfaktor noch dadurch weiter vergrößert werden kann, wenn in der obigen Beziehung (1) der Term E vergrößert wird, was bei der Erfindung durch das Mitschwingenlassen eines Hilfsschwingers gelingt.

Für dieses Schwingungssystem läßt sich dessen Qualitätsfaktor Q' als Funktion der Schwingfrequenz f ausdrücken: $1/Q' = c_1 f^{-1/2} + 2c_2 f^s,$   worin $c_1$, $c_2$ Konstanten und s eine Zahl zwischen 2 und 4 ist.

Der erste Term beschreibt den viskositäts-bedingten Enegieverlust und der zweite Term den Enegieverlust durch Schallabstrahlung. Dieser Term überwiegt, rein rechnerisch betrachtet, mit steigender Frequenz f rasch den ersten Term, jedoch trägt der nach der Erfindung vorhandene Hilfsschwinger wesentlich dazu bei, daß die Frequenz f niedrig bleibt.

Bei einer Weiterbildung der Erfindung, bei der das Meßrohr im (2, 1)-Glockenmode schwingt, besteht der Hilfsschwinger aus vier symmetrisch zur Achse des Meßrohrs angeordneten und dazu parallel verlaufenden, an den Enden des Trägers und des Meßrohrs befestigten Balken, und jeder Balken ist über ein in dessen jeweiliger Mitte angeordnetes Verbindungelement mit der Mitte des Meßrohrs verbunden.

In Ausgestaltung dieser Weiterbildung der Erfindung ist der Hilfsschwinger als ein zwischen seinen Enden mit vier Längsschlitzen versehenes Rohr ausgebildet.

Durch die Erfindung lassen sich die Vorteile von Einrohr-Glockenmode-Massedurchflußmessern, nämlich z.B. deren vollständige dynamische Ausbalancierbarkeit und deren kompakte Bauweise, auch bei größeren Nennweiten des Meßrohrs, insb. oberhalb von 50 mm, für die oben erwähnten nicht-idealen Fluide aufrecht erhalten.

Die Erfindung wird nun anhand der Figuren der Zeichnung näher erläutert, in denen ein Ausführungsbeispiel des Massedurchflußaufnehmers dargestellt ist und in denen gleiche Teile mit denselben Bezugszeichen versehen sind.

Fig. 1    zeigt eine vertikale, teilweise geschnittene Längsansicht des Massedurchflußaufnehmers,

Fig. 2    zeigt einen Schnitt durch das Meßrohr und den Träger entlang der Linie A-A von Fig. 1,

Fig. 3    zeigt einen Schnitt durch das Meßrohr und den Träger entlang der Linie B-B von Fig. 1,

Fig. 4    zeigt einen Schnitt durch das Meßrohr und den Träger entlang der Linie C-C von Fig. 1, und

Fig. 5    zeigt teilweise im Schnitt eine Perspektivansicht von Teilen des Massedurchflußaufnehmers nach Fig. 1.

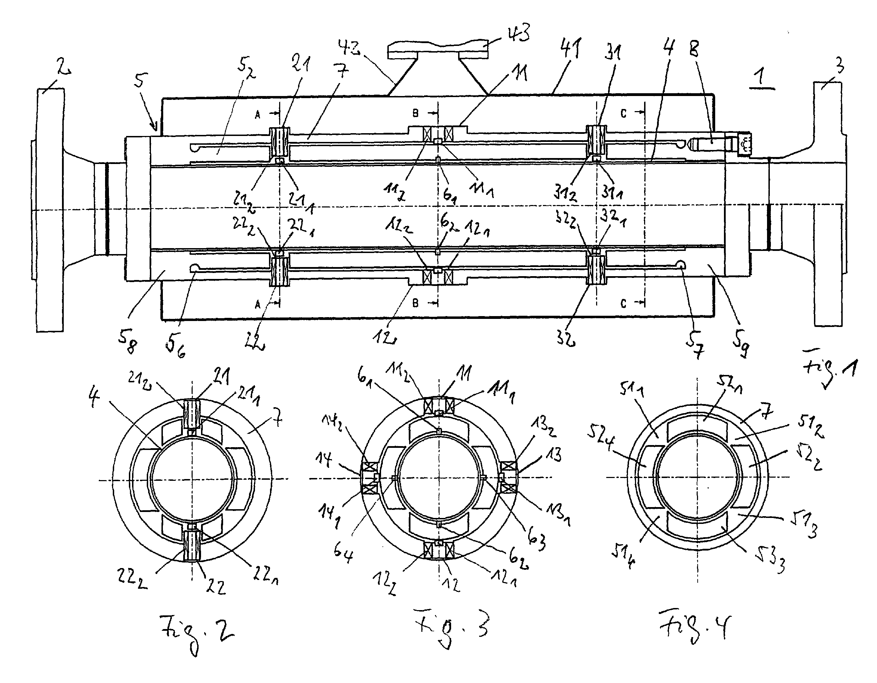

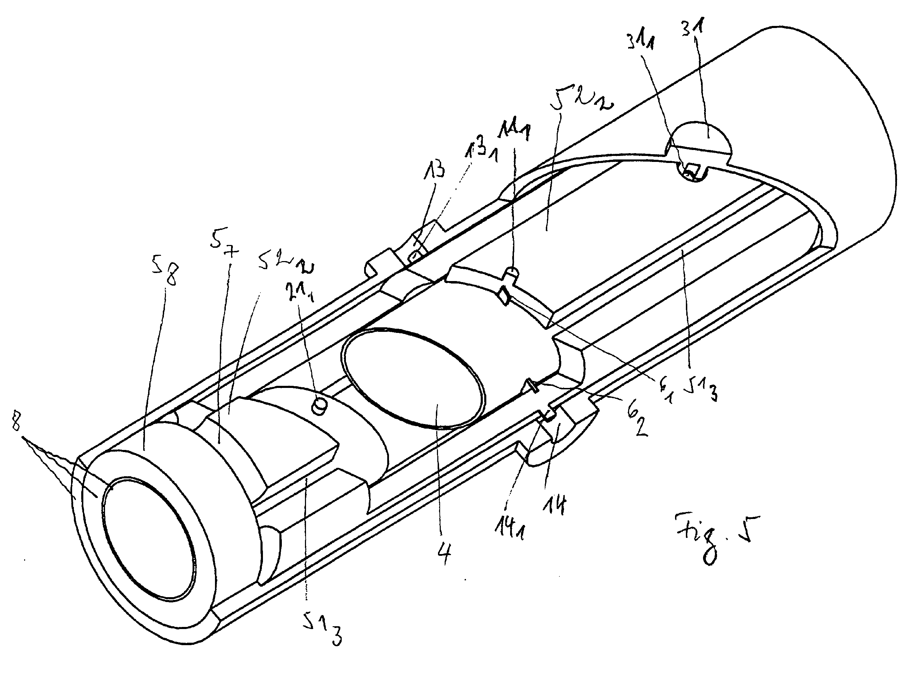

Der in Fig. 1 in vertikaler, teilweise geschnittener Längsansicht und in den Fig. 2 bis 4 in drei verschiedenen, jeweils zur Achse senkrechten Querschnittsebenen gezeigte Massedurchflußaufnehmer 1 ist in Fig. 5 zusätzlich noch perspektivisch dargestellt. In Fig. 5 sind einzelne Bereiche nur teilweise zu sehen, damit die an sich von äußeren Teilen verdeckten inneren Teile sichtbar sind. Die Fig. 5 wird daher unten nicht eigens beschrieben, sondern es sind in sie lediglich die zu den einzelnen Teilen gehörenden Bezugszeichen eingezeichnet.

Der Massedurchflußaufnehmer 1 ist in den Verlauf einer von einem zu messenden Fluid durchströmten, aus Gründen der Übersichtlichkeit jedoch nicht dargestellten Rohrleitung eines gegebenen Durchmessers, z.B. über Flansche 2, 3, einsetz- bzw. mit der Rohrleitung verbindbar.

Der Massedurchflußaufnehmer 1 hat ein Schwingungssystem, das ein einziges gerades, vom Fluid durchströmtes Meßrohr 4 als Hauptschwinger und einen das Fluid nicht berührenden Hilfsschwinger 5 enthält. Dieser hat in den Figuren der Zeichnung bevorzugt die Form eines viermal längsgeschlitzten Rohres, so daß sich im Bereich der Schlitze $51_1$, $51_2$, $51_3$, $51_4$ vier Balken $52_1$, $52_2$, $52_3$, $52_4$ ergeben, vgl. hierzu speziell die Fig. 4.

Durch diese mechanische Ausbildung des Hilfsschwingers 5 wird erreicht, daß das gesamte Schwingungssystem so dimensioniert ist, daß seine kinetische Energie mindestens doppelt so groß ist wie die kinetische Energie des Hauptschwingers, also des Meßrohrs 4.

Der Hilfsschwinger 5 ist ferner über derart ausgebildete und angeordnete Verbindungselemente mit dem Meßrohr 4 mechanisch gekoppelt, daß durch Corioliskräfte erzeugte Glockenmodi des Meßrohrs 4 möglichst wenig auf den Hilfsschwinger 5 übertragen werden.

Im bevorzugten Ausführungsbeispiel der Figuren sind vier derartige Verbindungselemente $6_1$, $6_2$, $6_3$, $6_4$ vorgesehen, die in der Mitte des Meßrohrs 4, auf dessen Umfang gegeneinander um 90° versetzt, angeordnet sind, vgl. hierzu speziell die Fig. 3.

Das Meßrohr 4 ist endseits im jeweiligen Ende $5_8$, $5_9$ des Hilfsschwingers 5 dicht, insb. vakuum-dicht, eingepaßt, z.B. eingeschweißt, eingelötet oder eingewalzt, vgl. zu letzterem die eigene ältere, noch nicht veröffentlichte EP-Anmeldung 95 81 0199.0.

Die Enden $5_8$, $5_9$ des Hilfsschwingers 5 sind ihrerseits im einen bzw. im anderen Ende eines Trägers fixiert, der bevorzugt, wie in den Figuren dargestellt, als Trägerrohr 7 ausgebildet ist.

Zur mechanischen Entkopplung der schwingfähigen Teile des Hilfsschwingers 5 von dessen nicht-schwingfähigen Teilen, also den Enden $5_8$, $5_9$, ist eine jeweilige Ringnut $5_6$, $5_7$ an der jeweiligen Übergangsstelle der schwingfähigen Teile in das entsprechende Ende vorgesehen. Dies Ringnuten $5_6$, $5_7$ sind in die Außenmantel-Fläche des Hilfsschwingers 5 eingearbeitet, nicht dagegen in dessen Innenmantel-Fläche.

Meßrohr 4, Hilfsschwinger 5 in Form des zur Bildung der vier Balken $51_1$, $51_2$, $51_3$, $51_4$ vierfach geschlitzten Rohres und Trägerrohr 7 sind im Ausführungsbeispiel koaxial zueinander angeordnet, vgl. die Fig. 2 bis 5.

Die Flansche 2, 3 sind entsprechend Fig. 1 am jeweiligen Ende von Meßrohr 4, Trägerrohr 7 und Hilfsschwinger 5, nämlich an der von diesen gebildeten, jeweils gemeinsamen Stirnfläche 8 (vgl. Fig. 5) durch Schrauben, von denen eine Schraube 9 rechts oben im Schnitt vollständig zu sehen ist, befestigt.

Im Betrieb wird das Schwingungssystem mit dem Meßrohr 4 und mit dem Hilfsschwinger 5 mittels mindestens eines Erregers in einer seiner Eigenschwingungen so angeregt, daß das Meßrohr 4 in einem Glockenmode (hoop mode), bevorzugt im (2, 1)-Glockenmode, schwingt. Die Balken $52_1$, $52_2$, $52_3$, $52_4$ des Hilfsschwingers 5 werden über die Verbindungselemente $6_1$, $6_2$, $6_3$, $6_4$ dagegen (lediglich) zu saitenartigen Biegeschwingungen angeregt.

Als Mittel, die das Meßrohr 4 zu solchen Resonanz-Glockenmode-Schwingungen anregen, sind beim Ausführungsbeispiel zwei elektrodynamische Erreger 11, 12 und zwei elektrodynamische Detektoren 13, 14 vorgesehen. Die Erreger 11, 12 und die Detektoren 13, 14 sind in der Mitte zwischen den endseitigen Stirnflächen 8 am Umfang des Trägerrohrs 7 angeordnet, vgl. die Fig. 1, 3 und 5.

Die Erreger 11, 12 und die Detektoren 13, 14 liegen jeweils auf einem Querschnittsdurchmesser des Trägerrohrs 7, welche beiden Durchmesser senkrecht zueinander sind.

Jeder Erreger 11, 12 und jeder Detektor 13, 14 umfaßt einen am Hilfsschwinger 5 befestigten jeweiligen Dauermagneten $11_1$, $11_2$, $11_3$, $11_4$ und eine am Trägerrohr 7 befestigte jeweilige Spule $12_1$, $12_2$, $12_3$, $12_4$, in die der Dauermagnet eintaucht und in der dieser hin- und herbewegbar ist. Zwei einander gegenüberliegende Dauermagnete befinden sich somit auch auf einem der erwähnten Querschnittsdurchmesser, ebenso wie im übrigen auch zwei einander gegenüberliegende Verbindungselemente $6_1$, $6_2$ bzw. $6_3$, $6_4$.

Zur Erregung eines Glockenmodes des Meßrohrs 4 werden die Spulen $12_1$, $12_2$ der Erreger 11, 12 von einer geeigneten Treiberschaltung mit Treiberstrom gespeist, die von Signalen der Spulen $12_3$, $12_4$ der Detektoren 13, 14 gesteuert ist. Einzelheiten dieser Schaltung liegen jedoch außerhalb des Rahmens der Erfindung, da diese sich ausschließlich mit der mechanischen Ausbildung des Massedurchflußaufnehmers beschäftigt.

Ferner ist mindestens je ein Sensor für die einlaßseitigen und die auslaßseitigen Schwingungen des Meßrohrs 4 vorgesehen. Diese Sensoren sind entlang des Meßrohrs 4 versetzt, bevorzugt im gleichen Abstand von den Erregern, angeordnet.

Beim Ausführungsbeispiel ist einlaßseitig ein erstes Paar von elektrodynamischen Sensoren 21, 22 und auslaßseitig ein zweites Paar von elektrodynamischen Sensoren vorhanden. Die beiden Sensoren sind am Umfang des Meßrohrs 4 auf einem Querschnittsdurchmesser angeordnet und fluchten in dessen Achsrichtung mit den entsprechenden Erregern, vgl. die Fig. 1, 2 und 5. Es liegen also z.B. der Erreger 11 und der Sensor 21 auf einer Geraden, die zur Achse des Massedurchflußaufnehmers parallel ist.

Jeder Sensor umfaßt einen am Meßrohr 4 befestigten Dauermagneten $21_1$, $22_1$, $31_1$, $32_1$ und eine am Trägerrohr 7 befestigte Spule $21_2$, $22_2$, $31_2$, $33_2$. In jede Spule taucht der zugehörige Dauermagnet ein und ist in dieser hin- und herbewegbar.

Die von den Sensoren erzeugten Signale werden in einer geeigneten Auswerte-Schaltung zu einem Massedurchfluß-Signal verarbeitet, deren Einzelheiten jedoch ebenfalls wie die der Treiberschaltung außerhalb des Rahmens der Erfindung liegen.

In Fig. 1 ist schließlich noch ein am Trägerrohr 7 fixiertes Gehäuse 41 gezeigt, das u.a. dem Schutz von Leitungen dient, die an die Erreger und die Sensoren angeschlossen, jedoch aus Gründen der Übersichtlichkeit nicht dargestellt sind. Das Gehäuse 41 ist mit einem halsartigen Übergangsstück 42 versehen, an dem ein nur teilweise gezeichnetes Elektronikgehäuse 43 zur Aufnahme der gesamten Treiber- und Auswerte-Elektronik des Massedurchflußaufnehmers 1 fixiert ist.

Es folgen in Form zweier Tabellen charakteristische Werte zweier konkret dimensionierter Massedurchflußaufnehmer A, B (Meßrohr 4 aus Titan, Hilfsschwinger 5 aus Stahl 1.4301):

Dabei bedeuten in Tabelle 2

"Meßrohr 4 allein":  ein ohne mechanische Ankopplung des Hilfsschwingers im (2, 1)-Glockenmode schwingendes Meßrohr,

$E_{kin4}$:  die kinetische Energie des Meßrohrs "allein",

$E_{kin4+5}$:  die kinetische Energie des gesamten Schwingsystems,

$E_{ela4}$:  die elastische Energie des Meßrohrs "allein",

$E_{ela4+5}$:  die elastische Energie des gesamten Schwingsystems.

Tabelle 1

|  | A | B |
|---|---|---|
| Durchmesser des Meßrohrs 4 | 84 mm | 84 mm |
| Wandstärke des Meßrohrs 4 | 2 mm | 2 mm |
| Querschnitt der vier Balken $52_1$, $52_2$, $52_3$, $52_4$ | 60 x 15 mm | 40 x 10 mm |
| Schwinglänge des Meßrohrs 4 und der vier Balken $51_1$ .. | je 500 mm | je 500 mm |

Tabelle 2

|  | A | | | |
|---|---|---|---|---|
| Dichte des Fluids in kg/m$^3$ | 0 | 500 | 995 | 1500 |
| Frequenz des Meßrohrs 4 allein in Hz | 757 | 548 | 452 | 392 |
| Frequenz des Schwingsystems in Hz | 345 | 337,9 | 331,1 | 324,6 |
| $E_{kin4+5}/E_{kin4}$ | 20,9 | 11,4 | 8,1 | 6,3 |
| $E_{ela4+5}/E_{ela4}$ | 4,3 | 4,3 | 4,3 | 4,3 |

(fortgesetzt)

| | B | | | |
|---|---|---|---|---|
| Dichte des Fluids in kg/m$^3$ | 0 | 500 | 995 | 1500 |
| Frequenz des Meßrohrs 4 allein in Hz | 757 | 548 | 452 | 392 |
| Frequenz des Schwingsystems in Hz | 311 | 297,6 | 285,8 | 275,2 |
| $E_{kin4+5}/E_{kin4}$ | 9,8 | 5,6 | 4,1 | 3,4 |
| $E_{ela4+5}/E_{ela4}$ | 1,6 | 1,6 | 1,6 | 1,6 |

Aus Tabelle 2 ist zu erkennen, daß sich bei konstanter Amplitude der Schwingung des Schwingssystems durch das Ankoppeln des Hilfsschwingers sowohl eine erhebliche Vergrößerung der kinetischen Energie des Schwingsystems als auch eine beträchtliche Verlagerung der Schwingfrequenz erzielen läßt. Somit wird die von der obigen Gleichung (2) gefordert Herabsetzung der Schwingfrequenz erreicht.

**Patentansprüche**

1.  Massedurchflußaufnehmer (1) nach dem Coriolie-Prinzip, der in eine Rohrleitung einfügbar und im Betrieb von einem zu nässenden Fluid durchströmt ist,

    - mit einem Schwingungssystem,

        -- das ein einzigen gerades, vom Fluid durchströmtes Meßrohr (4) als Hauptschwinger und
        -- das einen das Fluid nicht berührenden Hilfsschwinger (5) enthält,

            --- der über Verbindungselemente ($6_1$, $6_2$, $6_3$, $6_4$) mit dem Meßrohr (4) mechanisch gekoppelt ist, wobei das Meßrohr außerdem endseits im jeweiligen Ende des Hilfsschwingers dicht eingepasst ist, und -- das im Betrieb des Massedurchflußaufnehmers mittels mindestens eines Erregers (11, 12) in einer seiner Eigenschwingungen derart angeregt ist,
            --- daß das Meßrohr in einem Glockenmode schwingt,

    - mit einem Träger, insb. einem Trägerrohr (7), an dem das Schwingungssystem endseits befestigt und über den das Schwingungssystem mit der Rohrleitung verbunden ist, und
    - mit mindestens je einem sensor (21, 22; 31, 32) für die einlaßseitigen bzw. auslaßseitigen Schwingungen des MeBrohrs (4),
    - wobei das Schwingungssystem so dimensioniert ist,

        -- daß seine kinetische Energie ($E_{kin4+5}$) mindestens doppelt so groß ist wie die kinetische Energie ($E_{kin4}$) des Hauptschwingers, und

    - wobei die Verbindungselemente ($6_1$, $6_2$, $6_3$, $6_4$) derart ausgebildet und angeordnet sind,

        -- daß durch Corioliskräfte erzeugte Glockenmodi des Meßrohrs (4) möglichst wenig auf den Hilfsschwinger (5) übertragen werden.

2.  Massedurchflußaufnehmer nach Anspruch 1, bei dem

    - das Meßrohr (4) im (2, 1)-Glockenmode schwingt,
    - der Hilfsschwinger (5) aus vier symmetrisch zur Achse des Meßrohrs angeordneten und dazu parallel verlaufenden, an den Enden des Trägers und des Meßrohrs befestigten Balken ($52_1$, $52_2$, $52_3$, $52_4$) besteht und
    - jeder Balken über ein in deren jeweiliger Mitte angeordnetes Verbindungelement ($6_1$, $6_2$, $6_3$, $6_4$) mit der Mitte des Meßrohrs verbunden ist.

3. Massedurchflußaufnehmer nach Anspruch 2, bei dem der Hilfsschwinger (5) ein zwischen seinen Enden mit vier Längsschlitzen ($51_1$, $51_2$, $51_3$, $51_4$) versehenes Rohr ist.

**Claims**

1. A mass flow sensor (1) on the Coriolis principle, which may be inserted into a pipeline and through which in operation a fluid to be measured flows, comprising

   - an oscillatory system

      -- which contains a single straight measuring tube (4), through which fluid flows, as the main oscillator and
      -- an auxiliary oscillator (5) which is not in contact with the fluid,

         --- which is mechanically coupled with the measuring tube (4) via connecting elements ($6_1$, $6_2$, $6_3$, $6_4$), the measuring tube in addition being fitted in a fluid-tight manner at its ends in the respective end of the auxiliary oscillator, and

      -- which oscillatory system is excited in the operation of the mass flow sensor by means of at least one exciter (11, 12) in one of its natural oscillations in such a way

         --- that the measuring tube oscillates in a hoop mode,

   - a support, particularly a support tube (7), to which the oscillatory system is attached at its ends and via which the oscillatory system is connected to the pipeline, and
   - at least one sensor (21, 22; 31, 32) respectively for the inlet-side or outlet-side oscillations of the measuring tube (4),
   - the oscillatory system being so dimensioned

      -- that its kinetic energy ($E_{kin4+5}$) is at least twice that of the kinetic energy ($E_{kin4}$) of the main oscillator, and

   - the connecting elements ($6_1$, $6_2$, $6_3$, $6_4$) being so designed and arranged

      -- that hoop modes of the measuring tube (4) produced by Coriolis forces are transmitted as little as possible to the auxiliary oscillator (5).

2. A mass flow sensor according to Claim 1, in which

   - the measuring tube (4) oscillates in the (2, 1)-hoop mode,
   - the auxiliary oscillator (5) consists of four beams ($52_1$, $52_2$, $52_3$, $52_4$) arranged symmetrically to the axis of the measuring tube and extending parallel thereto, and attached to the ends of the support and the measuring tube, and
   - each beam is connected to the centre of the measuring tube via a connecting element ($6_1$, $6_2$, $6_3$, $6_4$) arranged in the centre of each beam.

3. A mass flow sensor according to Claim 2, in which the auxiliary oscillator (5) is a tube provided with four longitudinal slots ($51_1$, $51_2$, $51_3$, $51_4$) between its ends.

**Revendications**

1. Débitmètre massique (1) selon le principe de Coriolis, qui peut être inséré dans une conduite et, en fonctionnement, est parcouru par un fluide à mesurer

   - avec un système vibrant,

      -- qui contient en tant que vibreur principal un unique tube de mesure (4) rectiligne, parcouru par le fluide, et
      -- un vibreur auxiliaire (5), qui n'est pas en contact avec le fluide

--- qui est couplé mécaniquement avec le tube de mesure (4) au moyen d'éléments de liaison ($6_1$, $6_2$, $6_3$, $6_4$), le tube de mesure (4) étant par ailleurs adapté de façon étanche en ses extrémités par rapport à chaque extrémité du vibreur auxiliaire, et

-- qui, pendant le fonctionnement du débitmètre massique, est excité selon l'une de ses vibrations propres au moyen d'au moins un excitateur (11, 12), de telle manière

--- que le tube de mesure (4) vibre dans un mode cloche

- avec un support, notamment un tube-support (7), auquel le système vibrant est fixé en son extrémité, et par l'intermédiaire duquel le système vibrant est relié avec la conduite, et
- avec au moins un capteur (21, 22 ; 31, 32) respectivement pour les vibrations à l'entrée et à la sortie du tube de mesure (4),
- le système vibrant étant dimensionné de telle manière

-- que son énergie cinétique ($E_{kin4+5}$) est au minimum égale au double de l'énergie cinétique ($E_{kin4}$) du vibreur principal, et

- les éléments de liaison ($6_1$, $6_2$, $6_3$, $6_4$) étant conçus et disposés de telle manière

-- que les modes cloches du tube de mesure (4), générés par les forces de Coriolis, sont transmis le moins possible au vibreur auxiliaire (5).

**2.** Débitmètre massique selon la revendication 1, pour lequel

- le tube de mesure (4) vibre en mode cloche (2, 1),
- le vibreur auxiliaire (5) est constitué de quatre barres ($52_1$, $52_2$, $52_3$, $52_4$) disposées de façon symétrique à l'axe du tube de mesure (4) et parallèlement à ce dernier, lesquelles sont fixées aux extrémités du support et du tube de mesure (4) et
- chaque barre étant reliée avec le centre du tube de mesure (4) par l'intermédiaire d'un élément de liaison ($6_1$, $6_2$, $6_3$, $6_4$) disposé respectivement en son centre.

**3.** Débitmètre massique selon la revendication 3, pour lequel le vibreur auxiliaire (5) est un tube muni d'entailles longitudinales ($51_1$, $51_2$, $51_3$, $51_4$) entre ses extrémités.

Fig.1

Fig.2

Fig.3

Fig.4

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 317340 A
- EP 316908 A

- EP 95810199 A